# EUROPEAN PATENT APPLICATION

(11) **EP 4 787 770 A1**
(43) Date of publication of application: **05.08.2026**
(21) Application number: 25155651.0
(22) Date of filing: 03.02.2025
(51) Int. Cl.: H04L 9/06, H04L 9/32

(54) **IMPROVED AUTHENTICATION METHOD FOR DEVICES WITH LOW COMPUTING POWER AND SYSTEM**

(71) Applicant: Ledblox BV, 2640 Mortsel (BE)
(72) Inventor: VAN BEIRENDONCK, Wouter, 2640 Mortsel (BE)
(74) Representative: Oryon NV

(57) **Abstract**

The present invention concerns an authentication method for authenticating a low-computational (LC) device to a client via a device-client connection channel, comprising the steps of: a) generating a private/public (PP) key pair, preferably on a high-computational device; b) storing said private/public key pair in the low-computational device; c) generating a first hashcode from the public key of the PP key pair according to a predefined hashing algorithm; d) connecting the LC device via a device-client channel to a client device; e) transmitting the public key of the PP kay pair from the LC device to the client device via the device-client channel; f) generating a second hashcode from the transmitted public key at a client side of the device-client channel using said predefined hashing algorithm, and g) comparing the second hashcode to the first hashcode, thereby allowing authentication of the LC device to the client device.

## Description

### Technical field

The present invention pertains to the field of authentication of a device with respect to a network or other device, whereby the device has low computing power. The present invention also pertains to a related system of one or more devices with low computing power connecting to a server.

### Background

Devices with limited computing power often face significant challenges in implementing secure communication protocols. These devices typically
- lack a screen to display critical authentication information;
- connect to clients e.g. via USB or Bluetooth, i.e. communication channels that are vulnerable to interception and manipulation, and/or
- are unable to generate computationally intensive RSA or ECC key pairs.

Ensuring secure communication between such devices and clients requires robust methods for authenticating the device and establishing a secure channel for sensitive data exchange.

Devices with sufficient computing power and integrated screens can authenticate themselves e.g. through the following process:
1. Generate a public/private key pair.
2. Display or broadcast the public key as a barcode or QR code.
3. Allow a client to scan the public key and input it into the client software.
4. Enable the client to challenge the device by encrypting data with the public key and verifying the response.
5. Establish secure communication by exchanging AES keys using the authenticated public key.

This method, however, is unsuitable for devices with limited computational resources, which cannot generate such a public/private key pair within a reasonable timeframe. Furthermore, if devices lack a screen, it becomes difficult to configure such devices. Note hereby that in many case, such devices may typically need to be installed or restored on-site, thereby not allowing easy access to additional hardware that allows to install or restore the devices.

Low-computational (LC) devices may be connected to client devices, e.g. vuia USB or Bluetooth communication channels. Sending data over USB or Bluetooth is just like sending over ethernet or radio waves. They are all insecure by default. It is quite easy for anyone to intercept and even manipulate the data. Hence, one must always assume you cannot trust the transport medium, and add encryption on top of it for secure data exchange.

This present invention concerns a method and system for secure communication between one or more devices that have limited computing power, which preferably also lack a screen, and a client. The proposed method addresses the challenges of securely exchanging sensitive data between such devices and the client, assuming an insecure communication channel.

### Summary of the invention

The present invention concerns an authentication method, a related installation method and a system and its components in accordance with the independent claims. Further preferred embodiments of the invention are provided in the dependent claims and in the present document.

This invention provides a secure and user-friendly method for authenticating low-computational (LC) devices with limited computing power and optionally without screen.

The invention is based on:
- a pre-generated Key Pair: the LC device's public/private key pair is generated, preferably during production thereof, and preferably using a true random number generator (TRNG) or quantum random number generator (QRNG) and then securely communicated, e.g. flashed, onto the device where the PP key pair is stored.
- a hashcode algorithm which is capable to generate a first hashcode from at least the public key of the PP key pair. Hereby, the public key is transformed into a shorter hash-based identifier, i.e. a first hashcode, by performing the hashcode algorithm. Preferably the hashcode algorithm comprises performing iterative hashing operations until the first two bytes of the resulting hashcode equal 0x00. This produces a 24-25 character string that can preferably be engraved or printed on the device's casing, thus forming a physical tag which can be read by a user or user device. The first hashcode preferably is a compact hash representation.
- Out-of-band (OOB) Authentication Process:
   ∘ when a client device is connected to the LC device, it may request the public key via the device-client communication channel, which may be an insecure channel or an insecure channel type. The LC device correspondingly transmits the public key over said device-client communication channel.
   ∘ the user, e.g. the installer of the LC device, then inputs the first hashcode of the physical tag, e.g. the first hashcode printed on the LC device, into the client, preferably via a different communication channel from the device-client channel. Such authentication channel preferably is a secure channel or is a direct channel, i.e. the authentication channel may be a direct I/O channel of the client device, e.g. a keyboard of the client device.
   ∘ the client calculates a second hashcode of the received public key using the same hashing algorithm, e.g. the iterative process discussed above, and compares it to the user-provided first hashcode.
   o If the hashcodes match, the client device authenticates the LC device's public key.

The invention thus involves the use of a pre-generated public/private key pair, a compact hash-based representation of the public key, and user input to verify the authenticity of the device during its initial connection to a client.

### Overview of the figures

Fig. 1 illustrates an LC device in accordance with the present invention.
Fig. 2 illustrates the insecure channels between client device and LC device.
Fig. 3 illustrates embodiments of the present invention.
Figs. 4A-B illustrates symmetric key exchange.
Fig. 5 illustrates the problem of a man-in-the middle (MITM) attack, which can be solved using the present invention.
Figs. 6-8 illustrate embodiments of the present invention, and in particular embodiments of an authentication method according to the present invention.

### Detailed description of the invention

Within the context of the present application, the term "computing power" refers to the capability of a device of computing authentication tokens within a pre-defined timeframe. In this respect, the term "limited computing power" refers to the incapability of the device of computing the authentication tokens within a pre-defined timeframe. In embodiments of the present invention, said timeframe is 1s or more, more preferably 10s or more, still more preferably 30s or more, yet more preferably 60s or more, even more preferably 300s or more, still even more preferably 600s or more.

The present invention concerns an authentication method for authenticating a low-computational (LC) device to a client via a device-client connection channel, comprising the steps of:
a) generating a private/public (PP) key pair, preferably on a high-computational device;
b) storing said private/public key pair in the low-computational device;
c) generating a first hashcode from the public key of the PP key pair according to a predefined hashing algorithm;
d) connecting the LC device via a device-client channel to a client device;
e) transmitting the public key of the PP kay pair from the LC device to the client device via the device-client channel;
f) generating a second hashcode from the transmitted public key at a client side of the device-client channel using said predefined hashing algorithm, and
g) comparing the second hashcode to the first hashcode, thereby allowing authentication of the LC device to the client device.

The present invention further concerns a system comprising:
- a low-computational (LC) device comprising a storage medium, processing means and a communication interface, whereby the storage medium comprises a private/public (PP) key pair generated on a high-computational device and stored on the storage medium, whereby the processing means is configured to connect to a client via the communication interface and a device-client communication channel and to transmit the public key over said device-client communication channel, whereby the LC device comprises a physical tag comprising a first hashcode generated from the public key of the PP key pair according to a predefined hashing algorithm, the physical tag being readable by a user or user device;
- a client device configured to:
   (i) receive the public key of the PP pair from the LC device via the device-client communication channel;
   (ii) generate a second hashcode from the public key of the PP pair received in step (i) according to the predefined hashing algorithm;
   (iii) receive the first hashcode via an authentication channel which is different from the device-client channel, and
   (iv) compare the second hashcode to the first hashcode, and authenticate the LC device to the client device in case of a positive comparison between the second hashcode and the first hashcode and refuse authentication in case of a negative comparison between the second hashcode and the first hashcode.

The system is suitable, and preferably configured, for executing the methods of the present invention, and in particular the installation method of the present invention.

The present invention also concerns a low-computational (LC) device comprising a storage medium, processing means and a communication interface, whereby the storage medium comprises a private/public (PP) key pair generated on a high-computational device and stored on the storage medium, whereby the processing means is configured to connect to a client via the communication interface and a device-client communication channel and to transmit the public key over said device-client communication channel, whereby the LC device comprises a physical tag comprising a first hashcode generated from the public key of the PP key pair according to a predefined hashing algorithm, the physical tag being readable by a user or user device.

Furthermore, the present invention also concerns a client device configured to:
(i) receive the public key of the PP pair from the LC device via the device-client communication channel;
(ii) generate a second hashcode from the public key of the PP pair received in step (i) according to the predefined hashing algorithm;
(iii) receive a first hashcode via an authentication channel which is different from the device-client channel, and
(iv) compare the second hashcode to the first hashcode, and authenticate the LC device to the client device in case of a positive comparison between the second hashcode and the first hashcode and refuse authentication in case of a negative comparison between the second hashcode and the first hashcode.

The present invention also concerns an installation method of a low-computational (LC) device using a system according to the present invention, comprising the steps of:
- installing the LC device of the system by initiating a connection between the LC device and the client device via a device-client communication channel;
- transmitting the public key of the PP pair from the LC device to the client device via the device-client communication channel and generating a second hashcode from the transmitted public key of the PP pair according to the predefined hashing algorithm;
- reading the first hashcode from physical tag of the LC device and transmitting said first hashcode to the client device via an authentication channel which is different from the device-client channel, and
- comparing the second hashcode to the first hashcode, and authenticate the LC device to the client device in case of a positive comparison between the second hashcode and the first hashcode and refuse authentication in case of a negative comparison between the second hashcode and the first hashcode.

It should be clear to the reader that, in the following, features which give rise to specific embodiments can be present in the authentication method, the installation method and system of the present invention. For instance, a feature which is discussed in the context of an embodiment of the authentication method, may also be present in an embodiment of the installation method and/or the system of the present invention.

In a preferred embodiment, the PP key pair generation is performed during production of the LC device: a public/private key pair is generated for the device, preferably using a TRNG or QRNG. This key pair is securely stored on the device, and the public key undergoes a hashing algorithm, which preferably comprises iterative hashing operations. The hashing process may continue until the first two bytes of the hashcode equal 0x00, ensuring a compact and easily manageable representation. The resulting hash, preferably 24-25 characters long, can be engraved or printed on the device.

In an embodiment, when the LC device connects to the client device for the first time, the client device preferably requests the device's public key via device-client communication channel, e.g. via USB or Bluetooth, upon which request the public key is transmitted via said channel.

In an embodiment, the first hashcode is transmitted to the client device by a user manually inputting the first hashcode into client device software, preferably said client device software being a dedicated authentication software application. The first hashcode is preferably displayed on the LC device such that the user can easily read the first hashcode.

Verification of the public key is preferably performed at the client side, e.g. by the client device or by a third-party device in secure communication with the client device. Hereby, the public key received by the client device is subjected to the hashing algorithm, resulting in the second hashcode, which is compared with the first hashcode which was transmitted to or input into the client device in a previous step. If the calculated second hashcode matches the user-provided first hashcode, the device's public key is authenticated.

After authentication, the client device may perform any or any combination of the following steps:
- encrypt an AES key with the authenticated public key and transmit it securely to the device;
- use elliptic-curve Diffie-Hellman (ECDH) to establish a shared secret for secure communication.

The advantages of the present invention include
- Security: the invention ensures secure authentication and key exchange even over insecure channels.
- Usability: The hashcode, which can be a compact hash identifier, simplifies user input and minimizes errors.
- Compatibility: the method can be applied to a wide range of devices with limited computing power.

As such, the present invention addresses the challenges of authenticating and establishing secure communication with devices that have limited computing power and which may lack a screen. By leveraging pre-generated key pairs and a compact hash-based representation of the public key, it ensures both security and user-friendliness in the authentication process.

### Exemplary embodiments of the present invention:

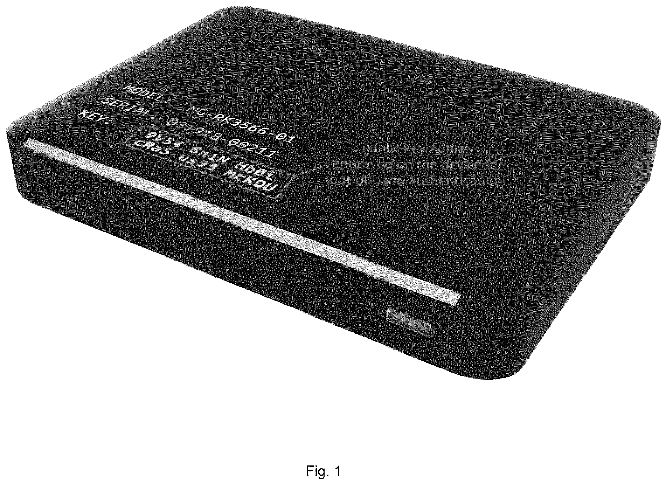

Given the following public key: the following hashcode can be generated: 9V546n1NHbBicRa5us33McKDU, which can be printed on the device as shown in fig. 1.

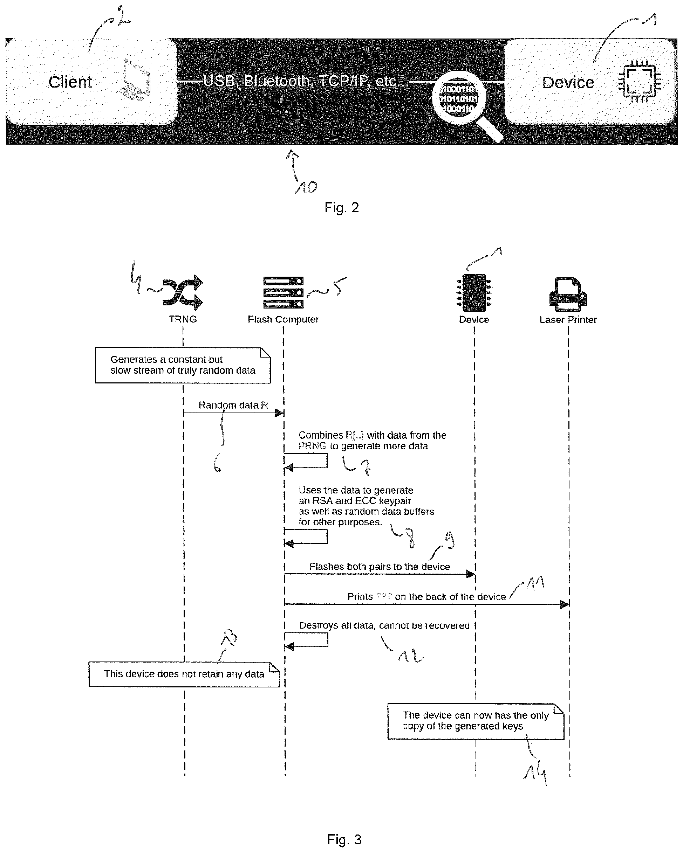

Fig. 2 illustrates an insecure communication channel (10) between LC device ("Device", 1) and client device ("Client", 2). USB, Bluetooth and even TCP/IP can be deemed unsecure, in particular when faced with a man-in-the-middle (MITM) attack.

Securing the connection may for instance require exchange of AES keys with the help of RSA and/or ECC. Typically, AES can be used to encrypt the data, RSA/ECC is used to encrypt the AES keys. Because the LC device itself could not generate RSA keys itself, this was handled by a computer (5) connected to a "True Random Number Generator" (4). The Computer (5) receives random data (R) from the TRNG (6), may combine (7) the random data with additional data from a "Pseudo Random Number Generator" (PRNG) and generate RSA and/or ECC key pairs (8), which pairs get flashed (9) to the LC device (1). The hashcode of the public key is then printed (11) on the back of the LC device.

In a preferred embodiment, the present invention comprises destroying data (12) allowing reconstruction of the generated PP key pair after the PP key pair is stored on the LC device. This ensures that the PP key pair, and in particular the private key, cannot be obtained due to a leak in security of the key pair generating device, which contains no further data anymore (13) concerning the PP keypair. In an embodiment, the LC device then is the only device comprising the PP key pair. Alternatively, the PP keypair is stored onto a set of other LC devices, allowing to make an exact duplicate of the LC device.

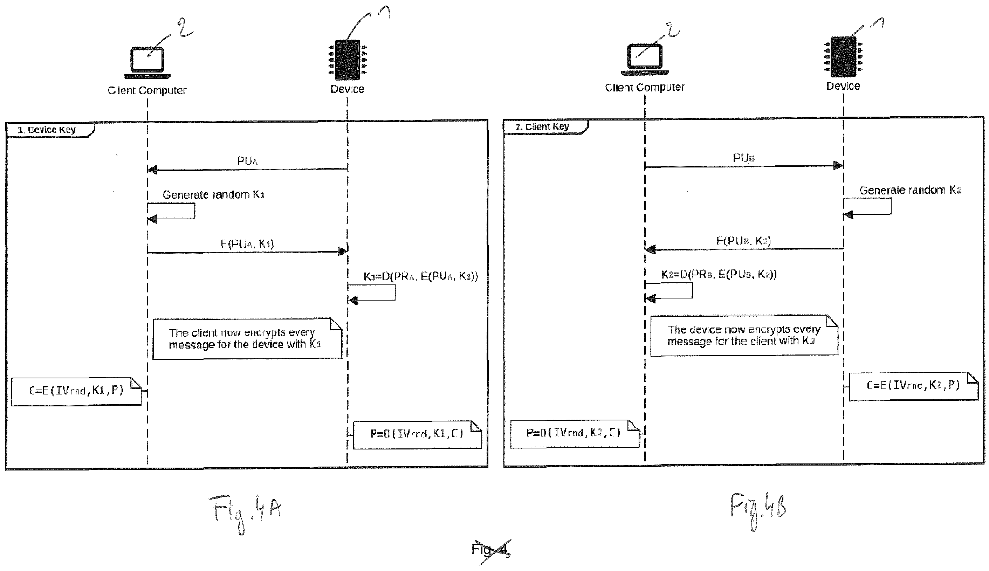

Figs. 4A-B illustrates symmetric key exchange, wherein a public key (PU_{A}) is transmitted from LC device (1) in Fig. 4A. the client device then may generate random key K1, which is encrypted (E(PU_{A},K1) using the public key PUA and transmitted the LC device, where it can be decrypted (D(PR_{A}, E(PU_{A},K1)) using private key PR_{A} of the LC device. Further messages can then be exchanged using key K1 for encryption. Fig. 4B shows the mirroring case, wherein the PP key pair of the client device (PU_{B}, PR_{B}) is used

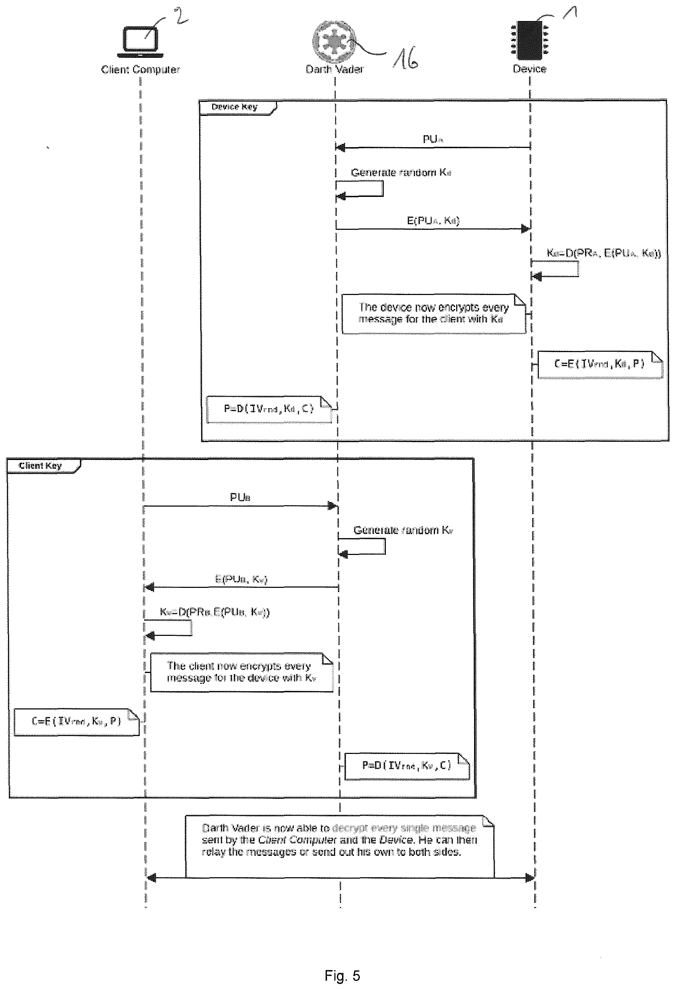

Fig. 5 illustrates a MITM attack by a device which is capable of intercepting communication between client device (2) and LC device (1). Hereto, the MITM ("Darth Vader") presents itself as the client device to the LC device to perform the communication as presented in fig. 4A, and presents itself as the LC device to the client device to perform the communication as presented in fig. 4B. the MITM intercepts thus all data and controls the encryption keys, thereby allowing full control over all exchanged communication.

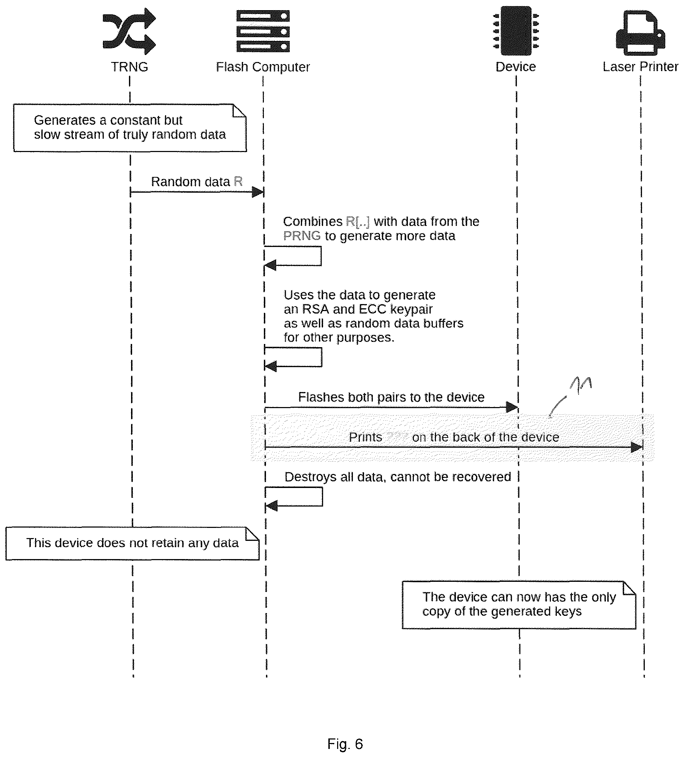

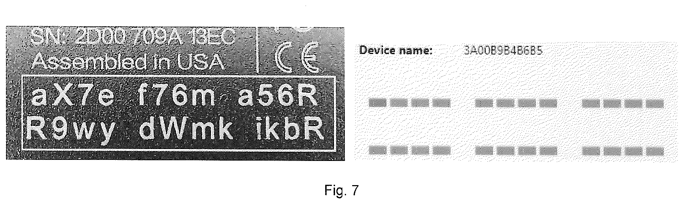

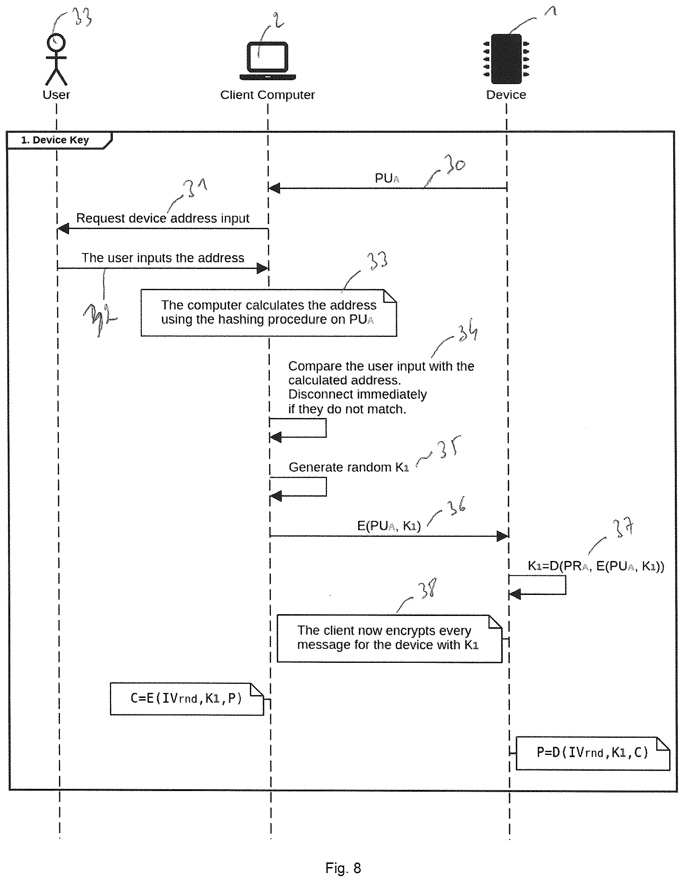

Fig. 6 basically is a copy of fig. 3, but stresses the importance of step (11) , wherein the hashcode of the public key is printed on the back of the device, as shown in Fig. 7 (left part). This hashcode can be used to be input into e.g. an app on the client device (right side of fig. 7), which allows the client device to compare it with the hashcode of the transmitted public key. The further steps of the authentication method are illustrated in fig. 8: the public key PU_{A} of the LC device is transmitted to the client device (30). The client device then requests input (31) from a user, e.g. the person installing the LC device. The user (33) input (34) the first hashcode ("address") found printed on the back of the LC device. The client device may than compute the second hashcode of the public key PU_{A} using the hashing algorithm (33) and compares this second hashcode with the user input of the first hashcode (34). If the hashcodes match, the LC device is authenticated and secure data transfer can be set up by generating a random key K1, which is transmitted, encrypted by PU_{A}, to the LC device (36), and which can be decrypted by the LC device (37) using the private key PR_{A}. The key K1 is now only known to LC device and client device and can be used to securely transfer further data (38).

## Claims

1. An authentication method for authenticating a low-computational (LC) device to a client via a device-client connection channel, comprising the steps of:
a) generating a private/public (PP) key pair, preferably on a high-computational device;
b) storing said private/public key pair in the low-computational device;
c) generating a first hashcode from the public key of the PP key pair according to a predefined hashing algorithm;
d) connecting the LC device via a device-client channel to a client device;
e) transmitting the public key of the PP kay pair from the LC device to the client device via the device-client channel;
f) generating a second hashcode from the transmitted public key at a client side of the device-client channel using said predefined hashing algorithm, and
g) comparing the second hashcode to the first hashcode, thereby allowing authentication of the LC device to the client device.

2. An authentication method according to claim 1, wherein after authentication, the client device performs any or any combination of the following steps:
- encrypt an AES key with the authenticated public key and transmit it securely to the device;
- use elliptic-curve Diffie-Hellman (ECDH) to establish a shared secret for secure communication.

3. An authentication method according to any of the claims 1 or 2, wherein the PP key pair is generated during production of the LC device and then securely communicated, onto the LC device.

4. An authentication method according to any of the claims 1 to 3, wherein the PP key pair is generated using a true random number generator (TRNG) or quantum random number generator (QRNG).

5. An authentication method according to any of the claims 1 to 4, wherein the hashcode algorithm comprises performing iterative hashing operations until the first two bytes of the resulting hashcode equal 0x00.

6. An authentication method according to any of the claims 1 to 5, wherein the first hashcode is printed on the LC device.

7. An authentication method according to any of the claims 1 to 6, wherein the LC device is not capable of computing the authentication tokens within a pre-defined timeframe, which timeframe is 30s or more.

8. An authentication method according to any of the claims 1 to 7, comprising the step destroying data allowing reconstruction of the generated PP key pair after the PP key pair is stored on the LC device.

9. A system comprising:
- a low-computational (LC) device comprising a storage medium, processing means and a communication interface, whereby the storage medium comprises a private/public (PP) key pair generated on a high-computational device and stored on the storage medium, whereby the processing means is configured to connect to a client via the communication interface and a device-client communication channel and to transmit the public key over said device-client communication channel, whereby the LC device comprises a physical tag comprising a first hashcode generated from the public key of the PP key pair according to a predefined hashing algorithm, the physical tag being readable by a user or user device;
- a client device configured to:
(i) receive the public key of the PP pair from the LC device via the device-client communication channel;
(ii) generate a second hashcode from the public key of the PP pair received in step (i) according to the predefined hashing algorithm;
(iii) receive the first hashcode via an authentication channel which is different from the device-client channel, and
(iv) compare the second hashcode to the first hashcode, and authenticate the LC device to the client device in case of a positive comparison between the second hashcode and the first hashcode and refuse authentication in case of a negative comparison between the second hashcode and the first hashcode.

10. An installation method of a low-computational (LC) device using a system according to claim 2, comprising the steps of:
- installing the LC device of the system by initiating a connection between the LC device and the client device via a device-client communication channel;
- transmitting the public key of the PP pair from the LC device to the client device via the device-client communication channel and generating a second hashcode from the transmitted public key of the PP pair according to the predefined hashing algorithm;
- reading the first hashcode from physical tag of the LC device and transmitting said first hashcode to the client device via an authentication channel which is different from the device-client channel, and
- comparing the second hashcode to the first hashcode, and authenticate the LC device to the client device in case of a positive comparison between the second hashcode and the first hashcode and refuse authentication in case of a negative comparison between the second hashcode and the first hashcode

11. A low-computational (LC) device comprising a storage medium, processing means and a communication interface, whereby the storage medium comprises a private/public (PP) key pair generated on a high-computational device and stored on the storage medium, whereby the processing means is configured to connect to a client via the communication interface and a device-client communication channel and to transmit the public key over said device-client communication channel, whereby the LC device comprises a physical tag comprising a first hashcode generated from the public key of the PP key pair according to a predefined hashing algorithm, the physical tag being readable by a user or user device.

12. A client device configured to:
(i) receive a public key of a PP pair from a LC device according to claim 4 via a device-client communication channel;
(ii) generate a second hashcode from the public key of the PP pair received in step (i) according to a predefined hashing algorithm;
(iii) receive a first hashcode via an authentication channel which is different from the device-client channel, and
(iv) compare the second hashcode to the first hashcode, and authenticate the LC device to the client device in case of a positive comparison between the second hashcode and the first hashcode and refuse authentication in case of a negative comparison between the second hashcode and the first hashcode.
